# EUROPEAN PATENT APPLICATION

(11) **EP 4 503 357 A1**
(43) Date of publication of application: **05.02.2025**
(21) Application number: 24192127.9
(22) Date of filing: 31.07.2024
(51) Int. Cl.: H02G 1/12

(54) **ELECTRICAL CABLE PREPARATION SYSTEM AND METHOD**

(30) Priority: 31.07.2023 US 202363516785 P
(71) Applicant: ULC Technologies, LLC, Hauppauge, NY 11788 (US)
(72) Inventor: CARADONNA, Austin, Massapequa (US); KURILOFF, Jonathan, St. James (US)
(74) Representative: Viering, Jentschura & Partner mbB Patent- und Rechtsanwälte

(57) **Abstract**

An automated electrical cable preparation system includes a working plate, a cutting tool, a first motor, a second motor, and a controller. The cutting tool is removably mounted to the working plate. The first motor is drivably connected to the working plate. The second motor is drivably connected to the cutting tool. The controller is in communication with the first motor and the second motor.

## Description

### CROSS-REFERENCES TO RELATED APPLICATIONS

This application claims priority to U.S. Provisional Application Serial No. 63/516,785, filed on July 31, 2023, the disclosures of which are hereby incorporated by reference in their entirety.

### BACKGROUND

Existing systems and methods for electrical cable preparation are inefficient and often result in damaged conductors, which can lead to poor electrical connections and safety concerns. To ensure a good electrical connection from one electrical cable to another, the electrical cables must be accurately spliced. Manual techniques for electrical cable jacket and insulation removal during splicing can be inaccurate and imprecise. Thus, it would be useful to provide more sophisticated and versatile devices and methods to prepare electrical cables for splicing.

### SUMMARY

Some embodiments provide an automated electrical cable preparation system that includes a working plate, a cutting tool, a first motor, a second motor, and a controller. The cutting tool is removably mounted to the working plate. The first motor is drivably connected to the working plate. The second motor is drivably connected to the cutting tool and configured to open and close the cutting tool. The controller is in communication with the first motor and the second motor.

In some embodiments, the cutting tool is arranged about an opening defined in the working plate. In some embodiments, the first arm includes a first outer plate and a second outer plate, and the second arm includes a first inner plate and a second inner plate. In some embodiments, the second motor actuates the cutting tool to selectively open and close. In some embodiments, the controller determines the rotational position of the working plate via a rotation sensor. In some embodiments, the cutting tool includes a first arm pivotably connected to a second arm. In some embodiments, the first arm rotatably supports a roller. In some embodiments, the second arm rotatably supports a cutting wheel. In some embodiments, an adjuster rod threadably engages the first arm and the second arm.

In some embodiments, turning the adjuster rod in a first direction causes the first arm to approach the second arm, and turning the adjuster rod in a second direction causes the first arm to separate from the second arm. In some embodiments, the second motor is drivably connected to the adjuster rod via a knob. In some embodiments, the adjuster rod threadably engages a first adjuster boss of the first arm, and threadably engages a second adjuster boss of the second arm. In some embodiments, the first adjuster boss is rotatably supported by a first inner plate and a second inner plate of the first arm, and the second adjuster boss is rotatably supported by a first outer plate and a second outer plate of the second arm. In some embodiments, the cutting tool is removably mounted to the working plate via a pivot pin that is threadably engaged with the working plate. In some embodiments, a grip is connected to the pivot pin. In some embodiments, an axial cutting blade is mounted to the working plate, and a third motor is drivably connected to the axial cutting blade and in communication with the controller. In some embodiments, a depth sensor is mounted to the working plate, engaged with the cutting tool, and in communication with the controller.

Some embodiments provide a method of preparing an end of an electrical cable for splicing including: rotationally fixing an electrical cable relative to a working plate, the electrical cable extending through an opening defined in the working plate; clamping a cutting tool about the electrical cable, the cutting tool being removably mounted to the working plate; and rotating the working plate about the electrical cable to circumferentially cut a jacket layer and a grounded strap layer of the electrical cable.

In some embodiments, the method also includes determining whether the cutting tool has reached a predetermined depth; and if the cutting tool has not reached the predetermined depth, tightening the cutting tool about the electrical cable. In some embodiments, the method also includes engaging an axial cutting blade with the jacket layer and advancing the electrical cable axially relative to the working plate, wherein the axial cutting blade slices the jacket layer axially as the electrical cable advances.

Some embodiments provide a cutting tool that includes a first arm, a second arm, an adjuster rod, a roller, and a cutting wheel. The first arm is pivotably connected to the second arm. The adjuster rod is threadably engaged with the first arm and the second arm. The roller is rotatably supported by the first arm. The cutting wheel is rotatably supported by the second arm. The cutting tool is substantially C-shaped.

In some embodiments, turning the adjuster rod in a first direction causes the first arm to approach the second arm, and turning the adjuster rod in a second direction causes the first arm to separate from the second arm.

Some embodiments provide a cable preparation device provided in the form of a hand tool for removing one or more layers of electrical cable. Some embodiments include a cable preparation device provided in the form of an automated tool including an insulator blade mounted on a motorized plate. Some embodiments provide a method of advanced cable preparation techniques to automatically prepare one or more layers of an electrical cable. In some embodiments, the cable preparation device(s) can work as a portion of a cable preparation system and/or a submodule of a cable preparation device. In some embodiments, the cable preparation device may be provided in the form of a robotic system to efficiently prepare electrical cables of different sizes and construction.

The overall cable preparation system comprises one or more cutting modules, one or more handles, one or more adjustable sizing modules, and one or more guide wheels. In some embodiments, the system can include one or more controllers, sensors, processors, or other components or submodules. In some embodiments, other configurations are contemplated.

In one embodiment, a method for deploying the automated cable preparation system described herein includes an advanced adjustment technique provided in the form of computer vision and automation where the cable preparation system is designed to detect the size and type of electrical cable and adjust the configuration of the cable preparation device. In some embodiments, the size and type of electrical cable is determined via a sensor module. In some embodiments, the configuration of the tool can be adjusted manually.

In one embodiment, the cable preparation device is provided in the form of a modified pipe cutting wheel designed to cut through an electrical cable jacket and ground straps, including concentric flat strap neutrals. In some embodiments, aspects of the hand tool are modified to implement the automated cable preparation system.

In some embodiments, the cable preparation system can include a connected platform. The connected platform can further include one or more modules or subassemblies including, but not limited to: a control module, a notification module, a sensor module, a cutting module, a guide module, a bending module, a communication module, a mechanical module, an electrical module, a power module, a safety system module, a computer vision module, and other modules and subsystems. In some embodiments, other modules or subassemblies are contemplated.

### BRIEF DESCRIPTION OF THE DRAWINGS

The accompanying drawings, which are incorporated in and form a part of this specification, illustrate embodiments of the disclosure and, together with the description, serve to explain the principles of embodiments of the disclosure:
FIG. 1 is an isometric view of a cutting tool, according to an embodiment;
FIG. 2 is a schematic view of an automated system including the cutting tool of FIG. 1;
FIG. 3 is an isometric view of the cutting tool of FIG. 1 engaging an electrical cable;
FIG. 4 is an isometric view illustrating cuts made in the electrical cable of FIG. 3;
FIG. 5 is an isometric view of a partially prepared end formed in the electrical cable of FIG. 3; and
FIG. 6 is a flow diagram depicting a method to prepare an end of an electrical cable for splicing, according to the principles of this disclosure.

### DETAILED DESCRIPTION

The following discussion is presented to enable a person skilled in the art to make and use embodiments of the invention. Various modifications to the illustrated embodiments will be readily apparent to those skilled in the art, and the generic principles herein can be applied to other embodiments and applications without departing from embodiments of the invention. Thus, embodiments of the invention are not intended to be limited to the embodiments shown but are to be accorded the widest scope consistent with the principles and features disclosed herein. The figures, which are not necessarily to scale, depict selected embodiments and are not intended to limit the scope of embodiments of the invention. Skilled artisans will recognize that the examples provided herein have many useful alternatives that fall within the scope of embodiments of the invention.

It is to be understood that the phraseology and terminology used herein are for the purpose of description and should not be regarded as limiting. For example, the use of "including," "comprising," or "having" and variations thereof herein is meant to encompass the items listed thereafter and equivalents thereof, as well as additional items. As used herein, unless otherwise specified or limited, the terms "mounted," "connected," "supported," and "coupled" and variations thereof are used broadly and encompass both direct and indirect mountings, connections, supports, and couplings. Further, unless otherwise specified or limited, "connected" and "coupled" are not restricted to physical or mechanical connections or couplings.

As used herein, unless otherwise specified or limited, "at least one of A, B, and C," and similar other phrases, are meant to indicate A, or B, or C, or any combination of A, B, and/or C. As such, this phrase, and similar other phrases can include single or multiple instances of A, B, and/or C, and, in the case that any of A, B, and/or C indicates a category of elements, single or multiple instances of any of the elements of the categories A, B, and/or C.

As mentioned above, current systems and methods to prepare electrical cables for splicing are inefficient and/or inadequate. Thus, it would be useful to provide more sophisticated and versatile tools, systems, and methods to prepare electrical cables for splicing.

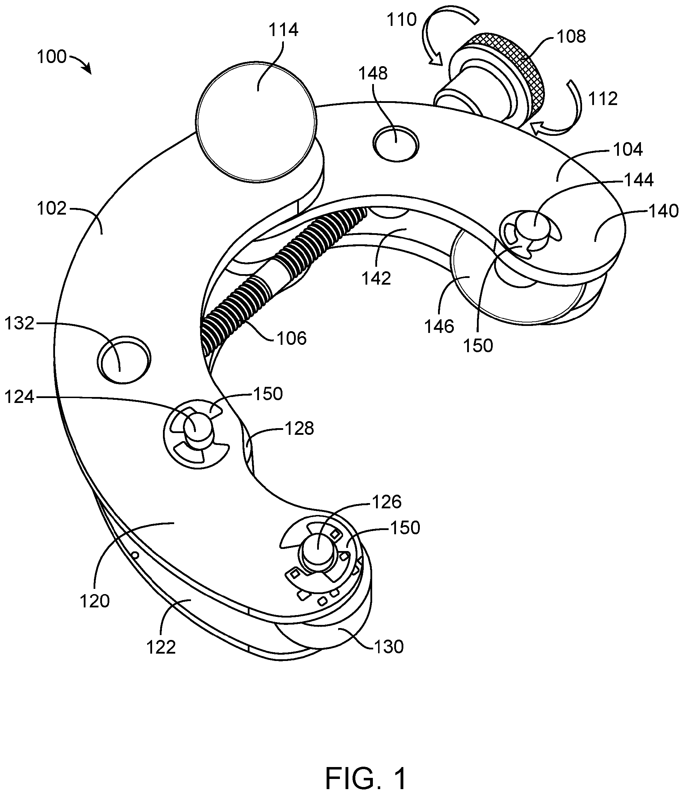

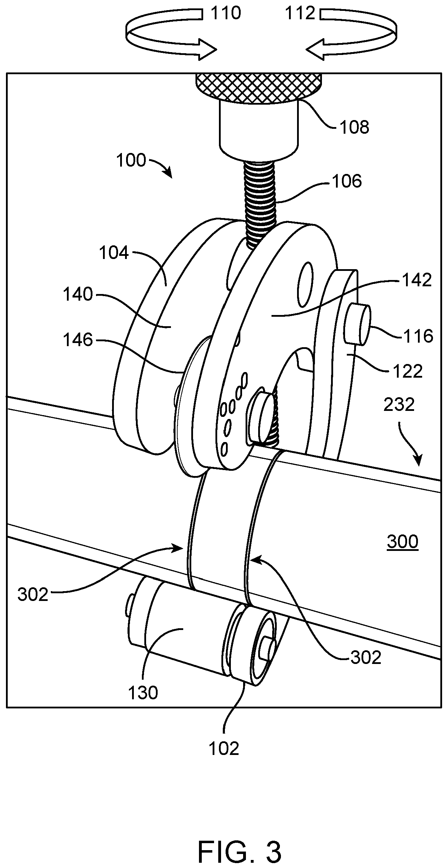

FIG. 1 illustrates a cutting tool 100, according to an embodiment. The cutting tool 100 includes a first arm 102 pivotably connected to a second arm 104. In some forms, the first arm 102 and the second arm 104 form a C-shape. An adjuster rod 106 is threadably engaged with the first arm 102 and the second arm 104. Further, a knob 108 is connected to the adjuster rod 106. When the adjuster rod 106 is rotated via the knob 108, the first arm 102 and the second arm 104 pivot relative to one another. For example, when the knob 108 is turned in a first direction 110, the first arm 102 and the second arm 104 approach one another about a pivot point. Conversely, when the knob 108 is rotated in a second direction 112, the first arm 102 and second arm 104 separate from each other about the pivot point. The cutting tool 100 also includes a grip 114, which may aid a user in rotating the cutting tool about a workpiece (e.g., an electrical cable). In some embodiments, the grip 114 is connected to a pivot pin 116 (shown in FIG. 3), which pivotably connects the first arm 102 to the second arm 104 about the pivot point.

Remaining with FIG. 1, more specifically, the first arm 102 includes a first outer plate 120 and a second outer plate 122. A first axle 124 and a second axle 126 are connected to the first outer plate 120 and the second outer plate 122. A first roller 128 is rotatably supported by the first axle 124 between the first outer plate 120 and the second outer plate 122. Similarly, a second roller 130 is rotatably supported by the second axle 126 between the first outer plate 120 and the second outer plate 122. The first roller 128 and the second roller 130 can be provided in the form of a plastic cylinder. In some forms, the first roller has a different diameter than the second roller 130, e.g., the first roller is larger than or smaller than the second roller 130. Further, a first adjuster boss 132 is threadably engaged with the adjuster rod 106 and rotatably engaged with the first outer plate 120 and the second outer plate 122.

Referring again to FIG. 1, the second arm 104 is located between the first outer plate 120 and the second outer plate 122. The second arm 104 includes a first inner plate 140 and a second inner plate 142. A third axle 144 is connected to the first inner plate 140 and the second inner plate 142. A cutting wheel 146 is rotatably supported by the third axle 144 between the first inner plate 140 and the second inner plate 142. Further, a second adjuster boss 148 is threadably engaged with the adjuster rod 106 and rotatably engaged with the first inner plate 140 and the second inner plate 142. In some embodiments, retaining clips 150 secure the first axle 124 and the second axle 126 to the first outer plate 120 and to the second outer plate 122. Similarly, in some embodiments, retaining clips 150 secure the third axle 144 to the first inner plate 140 and the second inner plate 142.

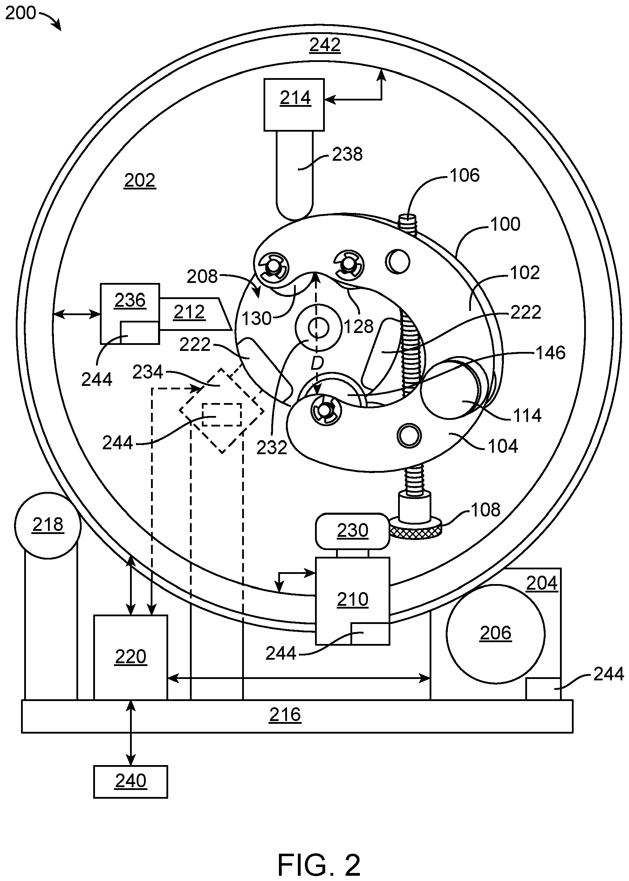

Referring to FIG. 2, an automated cable preparation system 200 includes the cutting tool 100 removably mounted to a working plate 202, which is rotatably supported and driven by a first motor 204 via a first driver wheel 206. In some embodiments, the pivot pin 116 (shown in FIG. 3) is threadably engaged with the working plate 202. Thus, the cutting tool 100 may be removably attached to the working plate 202 by screwing the pivot pin 116 into the working plate 202 via the grip 114. In some forms, the cutting tool 100 may be coupled to the working plate 202 by the pivot pin 116 or in other ways at the pivot point between the first arm 102 and second arm 104. The cutting tool 100 is arranged about an opening 208 defined in the working plate 202. In addition to the cutting tool 100, the working plate 202 supports a second motor 210, an axial cutting blade 212, and a depth sensor 214. In some embodiments, the working plate 202 is rotatably connected to a fixture 216 via a support roller 218. Further, in some embodiments, the fixture 216 also supports the first motor 204, a controller 220, and a plurality of axial driver rollers 222.

In some forms, the controller 220 includes a processor and/or a memory. For the purpose of defining and describing the present disclosure, it is noted that the term "processor" generally means a device that executes functions according to machine-readable instructions or that has been configured to execute functions in a manner analogous to machine-readable instructions, such as an integrated circuit, a microchip, a computer, a central processing unit, a graphics processing unit, field-programmable gate array (FPGA), an application-specific integrated circuit (ASIC), or any other computation device. Additionally, it is noted that the term "memory," as used herein, generally means one or more apparatus capable of storing data or machine-readable instructions for later retrieval, such as, but not limited to, RAM, ROM, flash memory, hard drives, or combinations thereof.

Looking again at FIG. 2, the second motor 210 is drivably connected to the knob 108 and thus the adjuster rod 106 via a second driver wheel 230. In some forms, the driver wheel 230 includes a first plurality of gear teeth, and the knob 108 each includes second a plurality of gear teeth. Further, the first plurality of gear teeth and the second plurality of gear teeth are configured to rotationally engage each other. In operation, the second motor 210 drives the adjuster rod 106 to pivot the first arm 102 and the second arm 104 relative to one another, thus selectively actuating (e.g., opening and closing) the cutting tool 100 about an electrical cable 232 that extends through the opening 208. Further, in operation, the plurality of axial driver rollers 222 is configured to clamp about, rotationally fix, and axially advance the electrical cable 232 through the opening 208. At least one of the plurality of axial driver rollers 222 is rotatably driven by a third motor 234 (shown in phantom). Additionally, in operation, a fourth motor 236 linearly drives the axial cutting blade 212 to engage the electrical cable 232. In some forms, the depth sensor 214 engages the cutting tool 100 via a plunger 238 to determine a distance D between the first arm 102 and the second arm 104 and thus a cut depth of the cutting wheel 146 into the electrical cable 232. In some forms, the depth sensor 214 is positioned between the first arm 102 and second arm 104 to determine the current distance between them.

Referring further to FIG. 2, controller 220 controls and communicates with the first motor 204, the third motor 234, and a power source 240. Additionally, the controller 220 is configured to control and communicate with the second motor 210, the depth sensor 214, and the fourth motor 236 via a rotatable bus 242. Each of the first motor, 204, the second motor 210, the third motor 234, and the fourth motor 236 includes a rotation sensor 244. The controller 220 monitors and determines the number of revolutions of the first motor 204, the second motor 210, and the third motor 234 via the rotation sensors 244 in order to control the rotational position of the working plate 202, the distance *D* between the first arm 102 and second arm 104, and the position of the electrical cable 232 within the opening 208, respectively. Similarly, the controller 220 monitors and determines the dimensional extent of the extension and retraction of the axial cutting blade 212 via the rotation sensor 244 of the fourth motor 236.

Remaining with FIG. 2, more specifically, in operation, the controller 220 instructs the third motor 234 to clamp onto and axially advance the electrical cable 232 using the axial driver rollers 222. Once the electrical cable 232 has advanced a predetermined length while remaining clamped and thus rotationally fixed by the axial driver rollers 222, the controller 220 instructs the second motor 210 to close the cutting tool 100 around the electrical cable 232. As the cutting tool 100 closes, the first roller 128, the second roller 130, and the cutting wheel 146 contact the electrical cable 232.

Referring again to FIG. 2, in operation, the controller 220 instructs the first motor 204 to rotate the working plate 202 about the electrical cable 232, thus rotating the cutting wheel 146 about, against, and into the electrical cable 232. The controller 220 also instructs the second motor 210 to tighten the cutting wheel 146 against the electrical cable 232 and rotate the working plate 202 about the electrical cable 232 until one or more predetermined depths (e.g., an outer jacket depth, a grounded strap depth, a semi-conductor depth, etc.) is reached and/or the electrical cable 232 is severed. In some embodiments, the tightening and/or rotation instructions are iterative. In some embodiments, the tightening and/or rotation instructions are continuous.

With further reference to FIG. 2, in operation, the controller 220 instructs the second motor 210 to open the cutting tool 100. In some instances, the controller 220 instructs the third motor 234 to axially eject the electrical cable 232 from the automated system 200. In some instances, the controller 220 instructs the third motor 234 to axially advance the electrical cable 232 through opening 208 in preparation for another cutting operation.

FIG. 3 illustrates the cutting tool 100 engaging the electrical cable 232. As described above, when the adjuster rod 106 is rotated in the first direction 110 via the knob 108, the first arm 102 and the second arm 104 approach one another, and the first roller 128 (shown in FIGS. 1 and 2), the second roller 130, and the cutting wheel 146 tighten the cutting tool 100 against the electrical cable 232. As the cutting tool 100 is rotated about the electrical cable 232, the cutting wheel 146 slices into and through a jacket layer 300 of the electrical cable 232, producing circumferential cuts 302. As the cutting tool 100 is further rotated about the electrical cable 232, the cutting wheel 146 cuts into additional layers of the electrical cable, as will be explained below.

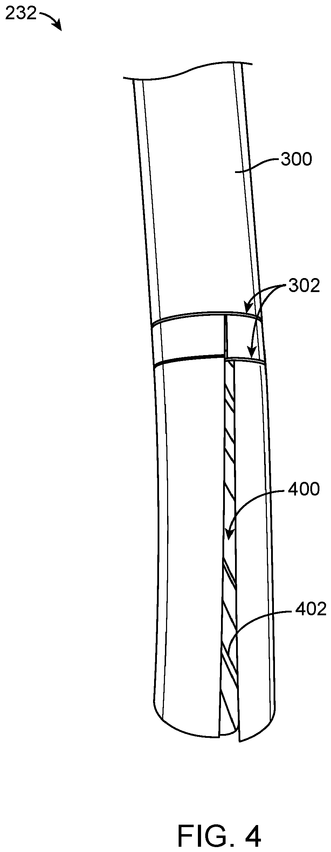

FIG. 4 illustrates the circumferential cuts 302 and an axial cut 400 made in the electrical cable 232. In operation, the axial cutting blade 212 (shown in FIG. 2) axially slices into and through the jacket layer 300 to produce the axial cut 400 and expose a grounded strap layer 402 of the electrical cable 232. In some instances, axially slicing through the jacket layer 300 relieves radial compression in the electrical cable 232. The axially sliced portions of the jacket layer 300 may then be discarded.

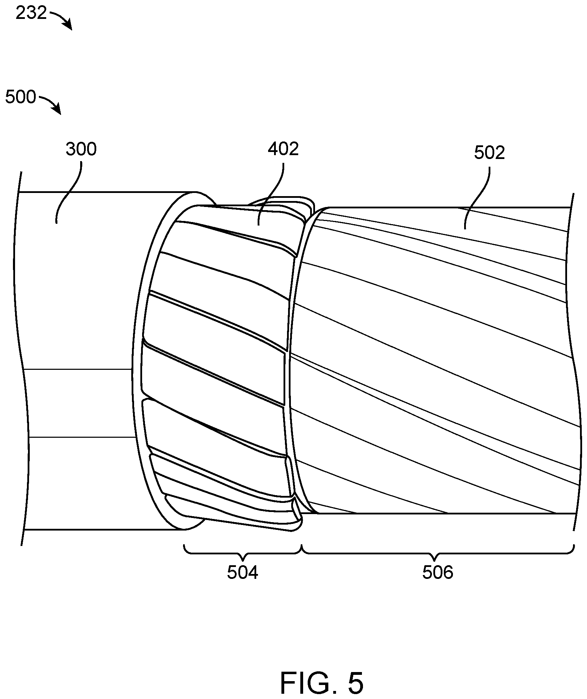

FIG. 5 illustrates a partially prepared end 500 formed in the electrical cable 232. In operation, the cutting tool 100 is increasingly tightened around the electrical cable 232 to slice into and through the grounded strap layer 402 and expose a semi-conductor layer 502 of the electrical cable 232. Thus, the partially prepared end 500 includes a first length 504 of the exposed grounded strap layer 402 and a second length 506 of the exposed semi-conductor layer 502.

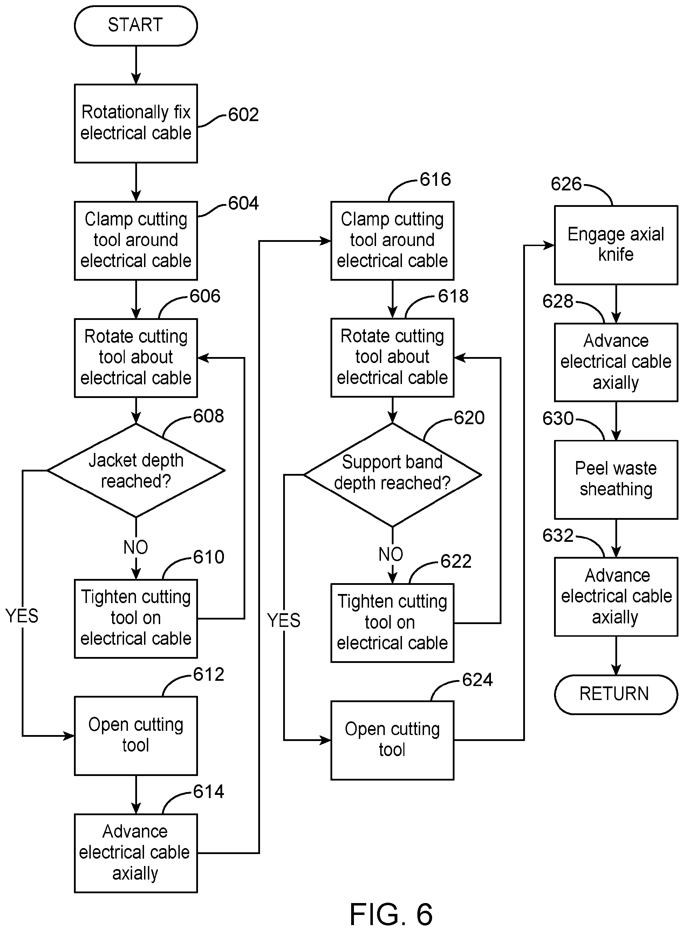

FIG. 6 illustrates a flow diagram depicting a method 600 executable by the controller 220 of FIG. 2 to produce the partially prepared end 500 of FIG. 5. The method 600 starts at block 602, where the controller 220 rotationally fixes the electrical cable 232. More specifically, the controller 220 instructs the third motor 234 to clamp the axial driver rollers 222 about the electrical cable 232. The method 600 then proceeds to block 604.

At block 604, the controller 220 clamps the cutting tool 100 around the electrical cable 232. More specifically, the controller 220 instructs the second motor 210 to rotate the knob 108 to close the first arm 102 and the second arm 104 around the electrical cable 232 and thus tighten the first roller 128, the second roller 130, and the cutting wheel 146 onto the electrical cable 232. The method 600 then proceeds to block 606.

At block 606, the controller 220 rotates the cutting tool 100 about the electrical cable 232. More specifically, the controller 220 instructs the first motor 204 to rotate the working plate 202 about the electrical cable 232, which causes the cutting wheel 146 to circumferentially cut into the jacket layer 300. The method 600 then proceeds to block 608.

At block 608, the controller 220 determines whether a jacket depth has been reached. More specifically, the controller 220 determines the distance *D* between the first arm 102 and the second arm 104 based on signals from the depth sensor 214. If the controller 220 determines that the distance *D* indicates that the jacket depth has not been reached, the method 600 proceeds to block 610. If the controller 220 determines that the distance D indicates that the jacket depth has been reached, the method 600 then proceeds to block 612.

At block 610, the controller 220 tightens the cutting tool 100 on the electrical cable 232. More specifically, the controller 220 instructs the second motor 210 to rotate the knob 108 further to further close the first arm 102 and the second arm 104 around the electrical cable 232 and thus further tighten the first roller 128, the second roller 130, and the cutting wheel 146 onto the electrical cable 232. The method 600 then returns to block 606.

At block 612, the controller 220 opens the cutting tool 100. More specifically, the controller 220 instructs the second motor 210 to rotate the knob 108 to separate the first arm 102 and the second arm 104 and thus release the first roller 128, the second roller 130, and the cutting wheel 146 from the electrical cable 232. The method 600 then proceeds to block 614.

At block 614, the controller 220 advances the electrical cable 232 axially. More specifically, the controller 220 instructs the third motor 234 to rotate one or more of the axial driver rollers 222, thus axially moving the electrical cable 232 a first predetermined distance (e.g., the first length 504) relative to the working plate 202 while keeping the electrical cable 232 rotationally fixed. The method 600 then proceeds to block 616.

At block 616, the controller 220 again clamps the cutting tool 100 around the electrical cable 232. More specifically, the controller 220 instructs the second motor 210 to rotate the knob 108 to close the first arm 102 and the second arm 104 around the electrical cable 232 and thus tighten the first roller 128, the second roller 130, and the cutting wheel 146 onto the electrical cable 232. The method 600 then proceeds to block 618.

At block 618, the controller 220 again rotates the cutting tool 100 around the electrical cable 232. More specifically, the controller 220 instructs the first motor 204 to rotate the working plate 202 about the electrical cable 232, which causes the cutting wheel 146 to slice into the grounded strap layer 402. The method 600 then proceeds to block 620.

At block 620, the controller 220 determines whether a grounded strap depth has been reached. More specifically, the controller 220 again measures the distance *D* between the first arm 102 and the second arm 104 based on signals from the depth sensor 214. If the controller 220 determines that the distance *D* indicates that the grounded strap depth has not been reached, the method 600 proceeds to block 622. If the controller 220 determines that the distance *D* indicates that the grounded strap depth has been reached, the method 600 proceeds to block 624.

At block 622, the controller 220 again tightens the cutting tool 100 on the electrical cable 232. More specifically, the controller 220 again instructs the second motor 210 to further rotate the knob 108 to further close the first arm 102 and the second arm 104 around the electrical cable 232 and thus further tighten the first roller 128, the second roller 130, and the cutting wheel 146 onto the electrical cable 232. The method 600 then returns to block 618.

At block 624, the controller 220 again opens the cutting tool 100. More specifically, the controller 220 instructs the second motor 210 to rotate the knob 108 again to separate the first arm 102 and the second arm 104 and thus release the first roller 128, the second roller 130, and the cutting wheel 146 from the electrical cable 232. The method 600 then proceeds to block 626.

At block 626, the controller 220 engages the axial cutting blade 212 with the electrical cable 232. More specifically, the controller 220 instructs the fourth motor 236 to extend the axial cutting blade 212 against and through the jacket layer 300 of the electrical cable 232. The method 600 then proceeds to block 628.

At block 628, the controller 220 advances the electrical cable 232 axially again. More specifically, the controller 220 instructs the third motor 234 to rotate one or more of the axial driver rollers 222 again, thus axially moving the electrical cable 232 a second predetermined distance (e.g., the first length 504 plus the second length 506) relative to the working plate 202 while keeping the electrical cable 232 rotationally fixed. As the electrical cable 232 moves axially, the axial cutting blade 212 slices through the jacket layer 300 axially. In some embodiments, the controller 220 moves the electrical cable 232 back and forth via the one or more axial driver rollers 222 to axially slice the jacket layer 300 along the second predetermined length. The method 600 then proceeds to block 630.

At block 630, the controller 220 peels waste sheathing from the electrical cable 232. More specifically, the controller 220 tightens the axial cutting blade 212 and/or the cutting wheel 146 against the electrical cable 232 to remove the jacket layer 300 and the grounded strap layer 402 along the second length 506 and further remove the j acket layer 300 along the first length 504. The method 600 then proceeds to block 632.

At block 632, the controller 220 again advances the electrical cable 232 axially. More specifically, the controller 220 instructs the third motor 234 to rotate one or more of the axial driver rollers 222, thus axially moving the electrical cable 232 relative to the working plate 202. In some embodiments, the controller 220 axially advances the electrical cable 232 in preparation for additional cutting operations. In some embodiments, the controller 220 axially ejects the electrical cable 232 from the automated system 200. The method 600 then returns to block 602.

In other embodiments, other configurations are possible. For example, those of skill in the art will recognize, according to the principles and concepts disclosed herein, that various combinations, sub-combinations, and substitutions of the components discussed above can provide improved electrical cable preparation tools and methods.

The previous description of the disclosed embodiments is provided to enable any person skilled in the art to make or use the invention. Various modifications to these embodiments will be readily apparent to those skilled in the art, and the generic principles defined herein may be applied to other embodiments without departing from the spirit or scope of the invention. Thus, the invention is not intended to be limited to the embodiments shown herein but is to be accorded the widest scope consistent with the principles and novel features disclosed herein.

## Claims

1. An automated electrical cable preparation system comprising:
a working plate;
a cutting tool removably mounted to the working plate, the cutting tool including a first arm pivotably connected to a second arm;
a first motor drivably connected to the working plate;
a second motor drivably connected to the cutting tool and configured to open and close the cutting tool; and
a controller in communication with the first motor and the second motor, wherein the controller is configured to instruct the second motor to clamp the cutting tool around an electrical cable.

2. The automated electrical cable preparation system of claim 1, wherein the cutting tool is arranged about an opening defined in the working plate.

3. The automated electrical cable preparation system of any one of claims 1 or 2, wherein the first arm includes a first outer plate and a second outer plate, and the second arm includes a first inner plate and a second inner plate.

4. The automated electrical cable preparation system of any one of claims 1 to 3, wherein the controller determines the rotational position of the working plate via a rotation sensor.

5. The automated electrical cable preparation system of any one of claims 1 to 4, wherein the first arm rotatably supports a roller.

6. The automated electrical cable preparation system of any one of claims 1 to 5, wherein the second arm rotatably supports a cutting wheel.

7. The automated electrical cable preparation system of any of of claims 1 to 6, wherein an adjuster rod threadably engages the first arm and the second arm.

8. The automated electrical cable preparation system of claim 7, wherein
turning the adjuster rod in a first direction causes the first arm to approach the second arm, and
turning the adjuster rod in a second direction causes the first arm to separate from the second arm.

9. The automated electrical cable preparation system of any one of claims 7 or 8, wherein the second motor is drivably connected to the adjuster rod via a knob.

10. The automated electrical cable preparation system of any one of claims 7 to 9, wherein the adjuster rod
threadably engages a first adjuster boss of the first arm, and
threadably engages a second adjuster boss of the second arm.

11. The automated electrical cable preparation system of claim 10, wherein
the first adjuster boss is rotatably supported by a first inner plate and a second inner plate of the first arm, and
the second adjuster boss is rotatably supported by a first outer plate and a second outer plate of the second arm.

12. The automated electrical cable preparation system of any one of claims 1 to 11, wherein the cutting tool is removably mounted to the working plate via a pivot pin threadably engaged with the working plate.

13. The automated electrical cable preparation system of claim 12, wherein a grip is connected to the pivot pin.

14. The automated electrical cable preparation system of any one of claims 1 to 13, further comprising:
an axial cutting blade mounted to the working plate, and
a third motor drivably connected to the axial cutting blade and in communication with the controller.

15. The automated electrical cable preparation system of any one of claims 1 to 14, further comprising a depth sensor that is mounted to the working plate, engaged with the cutting tool, and in communication with the controller.
